(19) Europäisches Patentamt
European Patent Office
Office européen des brevets

(11) **EP 1 075 977 A2**

(12) **EUROPÄISCHE PATENTANMELDUNG**

(43) Veröffentlichungstag:
**14.02.2001 Patentblatt 2001/07**

(51) Int. Cl.[7]: **B60K 31/00**, B60T 7/22,
B60T 8/00

(21) Anmeldenummer: **00114836.0**

(22) Anmeldetag: **11.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.08.1999 DE 19937942**

(71) Anmelder: **DaimlerChrysler AG
70567 Stuttgart (DE)**

(72) Erfinder: **Steiner, Manfred
71364 Winnenden (DE)**

(54) **Verfahren und Steuerungssystem zur Abstands- und Geschwindigkeitsregelung eines Fahrzeugs**

(57) Bei einem Verfahren zur Regelung des Abstandes und/oder der Geschwindigkeit eines einem Führungsfahrzeug nacheilenden Folgefahrzeugs wird der Abstand zwischen Folgefahrzeug und Führungsfahrzeug gemessen und werden die Geschwindigkeiten des Folgefahrzeugs und des Führungsfahrzeugs gemessen, wobei bei Unterschreitung eines Mindestabstands und/oder bei Überschreitung einer Mindestgeschwindigkeits-Differenz eine Sollverzögerung für das Folgefahrzeug ermittelt wird und eine automatische Betätigung der Fahrzeugbremse des Folgefahrzeugs eingeleitet wird.

In einer einfachen und sicheren Ausführung ist vorgesehen, daß die automatische Betätigung der Fahrzeugbremse nur für den Fall ausgelöst wird, daß der Betrag der Sollverzögerung einen Schwellenwert überschreitet.

EP 1 075 977 A2

**Beschreibung**

Die Erfindung betrifft ein Verfahren und ein Steuerungssystem zur Abstands- und Geschwindigkeitsregelung eines Fahrzeugs nach dem Oberbegriff des Anspruches 1 bzw. 16.

Aus der Druckschrift DE 44 07 082 A1 ist ein Fahrzeuggeschwindigkeits-Steuerungssystem für die Einstellung der Geschwindigkeit eines Fahrzeugs bekannt, welches einem vorausfahrenden Fahrzeug nachfolgt. In Abhängigkeit des Abstands und der Relativgeschwindigkeit werden in einer Regel- und Steuereinheit des Systems zur Beeinflussung des auf die Straße übertragbaren Moments Stellsignale zur Einstellung des Getriebes und der Drosselklappe erzeugt, wodurch der Abstand zwischen dem gesteuerten Fahrzeug und dem vorausfahrenden Fahrzeug reguliert werden kann.

Aus der gattungsbildenden Druckschrift DE 43 28 304 A1 ist ein Steuersystem für eine automatische Bremse für ein Automobil bekannt, das eine Meßeinrichtung zur Ermittlung des Relativabstandes zwischen dem Führungsfahrzeug und dem Folgefahrzeug und zur Messung der Geschwindigkeiten beider Fahrzeuge aufweist. Auf der Grundlage dieser Meßwerte wird in einer Berechnungseinheit des Steuerungssystems gemäß einer hinterlegten Verknüpfungsvorschrift eine Aussage getroffen, ob Kollisionsgefahr des nachfolgenden Fahrzeuges mit dem Führungsfahrzeug besteht. In diesem Fall wird eine Sollverzögerung für das Folgefahrzeug ermittelt, die zur Abbremsung des Fahrzeuges in einen entsprechenden Bremsdruck umgewandelt wird, um eine Kollision zwischen den Fahrzeugen zu verhindern.

Dieses Steuerungssystem hat den Nachteil, daß die zur Verhinderung der Kollision erforderliche Verzögerung schlagartig aufgebaut und in einen Bremsdruck umgewandelt wird, sobald von dem System eine Kollisionsgefahr erkannt worden ist. Der plötzliche und vom Fahrer nicht vorhersehbare Aufbau der Bremsverzögerung führt zu Komforteinbußen und kann zu Irritationen des Fahrers führen, was Fehlreaktionen und Gefährdungen des Fahrers zur Folge haben kann.

Der Erfindung liegt das Problem zugrunde, den Abstand und/oder die Relativgeschwindigkeit eines Folgefahrzeugs in bezug auf ein vorausfahrendes Fahrzeug fahrerfreundlich und sicher einzustellen.

Dieses Problem wird erfindungsgemäß mit den Merkmalen des Anspruches 1 bzw. 16 gelöst.

Gemäß der Neuerung ist vorgesehen, daß zunächst in Abhängigkeit des Abstands zwischen den Fahrzeugen und/oder der Geschwindigkeitsdifferenz eine Sollverzögerung ermittelt wird, welche das nachfolgende Fahrzeug zur Einhaltung eines Sicherheitsabstandes bzw. zur Einhaltung einer erlaubten Geschwindigkeitsdifferenz durchlaufen soll. Die Sollverzögerung wird jedoch nur dann in einen automatischen Bremsvorgang umgesetzt, falls der Betrag der Sollverzögerung einen Schwellenwert, der als positiver Wert festgesetzt wird, überschreitet. Die Einführung eines Schwellenwertes und der Vergleich der berechneten Sollverzögerung mit dem Schwellenwert stellt sicher, daß die automatische Betätigung der Fahrzeugbremse und die damit einhergehende höhere Fahrzeugverzögerung nur in solchen Fällen durchgeführt wird, in denen mit anderen Mitteln eine Anpassung der Geschwindigkeit bzw. des Abstandes nicht oder nicht mit ausreichender Sicherheit verwirklicht werden kann. Der Wert der Sollverzögerung bietet einen verläßlichen Anhaltspunkt für die Entscheidung, ob aus Sicherheitsgründen eine automatische Betätigung der Fahrzeugbremse erforderlich ist.

Ein weiterer Vorteil dieser Methode liegt darin, daß die automatische Betätigung der Fahrzeugbremse jederzeit aufgehoben werden kann, sobald die Bedingung, daß der Betrag der Sollverzögerung einen zugehörigen Schwellenwert überschreitet, nicht mehr erfüllt ist, so daß die für die Abbremsung des Fahrzeuges erforderliche Sollverzögerung mit anderen Mitteln erreicht werden kann, die ein weicheres Bremsverhalten mit höherem Komfort aufweisen. Das härtere Bremsverhalten durch Betätigung der Fahrzeugbremse ist den kritischen Situationen vorbehalten.

Zweckmäßig wird für den Fall, daß der Betrag der Sollverzögerung unterhalb des Schwellenwerts liegt, die Fahrzeugverzögerung über Getriebeeingriffe und/oder Motormomenten-Eingriffe realisiert. Derartige Fahrzeugeingriffe, beispielsweise automatisiertes Herunterschalten in eine niedrigere Gangstufe, automatisierte Eingriffe in die Drosselklappenposition oder Beeinflussung der Kraftstoffeinspritzung, können mit bereits bestehenden Geschwindigkeits- und Abstandsregelsystemen durchgeführt werden, die vorteilhaft in das neuartige Steuerungssystem eingebunden werden können.

Für den Fall, daß ein automatischer Bremsvorgang wegen Überschreitens des Schwellenwerts erforderlich ist, wird der Bremsvorgang vorzugsweise so lange aufrecht erhalten, bis ein Grenzwert der zyklisch ermittelten Sollverzögerung erreicht worden ist, wobei der Grenzwert betragsmäßig kleiner ist als der Schwellenwert, so daß der automatische Bremsvorgang zur Abbremsung des Fahrzeugs auf eine niedrigere Geschwindigkeit zunächst aufrecht erhalten wird und anschließend eine weitere Verzögerung, beispielsweise durch Getriebeeingriffe oder motormomenten Eingriffe ausgeführt wird.

Die Sollverzögerung berechnet sich vorteilhaft als Funktion des Fahrzeugabstandes, der Differenzgeschwindigkeit sowie der Geschwindigkeitsänderung des vorausfahrenden Fahrzeuges. Die Geschwindigkeitsdifferenz fließt bevorzugt quadratisch in die Berechnung der Sollverzögerung ein und erfährt hierdurch eine stärkere Gewichtung. Die Geschwindigkeitsänderung des Führungsfahrzeugs geht zweckmäßig linear in die Berechnungsvorschrift für die Sollverzögerung ein, der Fahrzeugabstand fließt dagegen reziprok ein, um zu gewährleisten, daß kleine Abstände eine hohe Fahrzeugverzögerung zur Folge haben.

In einer bevorzugten Weiterbildung ist vorgesehen, daß die Sollverzögerung für den Fall, daß der Fahrzeugabstand einen unteren Grenzwert unterschreitet, auf einen konstanten Maximalwert gesetzt wird, der oberhalb der nach der Berechnungsvorschrift ermittelten Werte der Sollverzögerung liegt. Es soll dadurch sichergestellt werden, daß im Falle verhältnismäßig kleiner Fahrzeugabstände, die ein hohes Gefahrenpotential bergen, die Fahrzeugverzögerung auf einen Maximalwert gesetzt wird, um das Fahrzeug schnellstmöglich abzubremsen und den Fahrzeugabstand zu vergrößern. Der untere Fahrzeugabstands-Grenzwert hängt insbesondere von der Geschwindigkeit des Führungsfahrzeugs ab, wobei bevorzugt ein linearer Zusammenhang gewählt wird, so daß mit zunehmender Geschwindigkeit des Führungsfahrzeugs der untere Grenzwert proportional ansteigt.

Die automatische Betätigung der Fahrzeugbremse erfolgt vorteilhaft unabhängig von einer vom Fahrer erzeugten Bremsbetätigung, um sicherzustellen, daß im Falle einer unzureichenden Fahrer-Bremsbetätigung die erforderliche Fahrzeugverzögerung automatisch über das Steuerungssystem erreicht werden kann. Für diese Ausführung können insbesondere bereits vorhandene Bremsassistent-Systeme zusätzlich oder alternativ zu Abstandsregel- bzw. Geschwindigkeits-Regelsystemen in das erfindungsgemäße Steuerungssystem eingebunden werden.

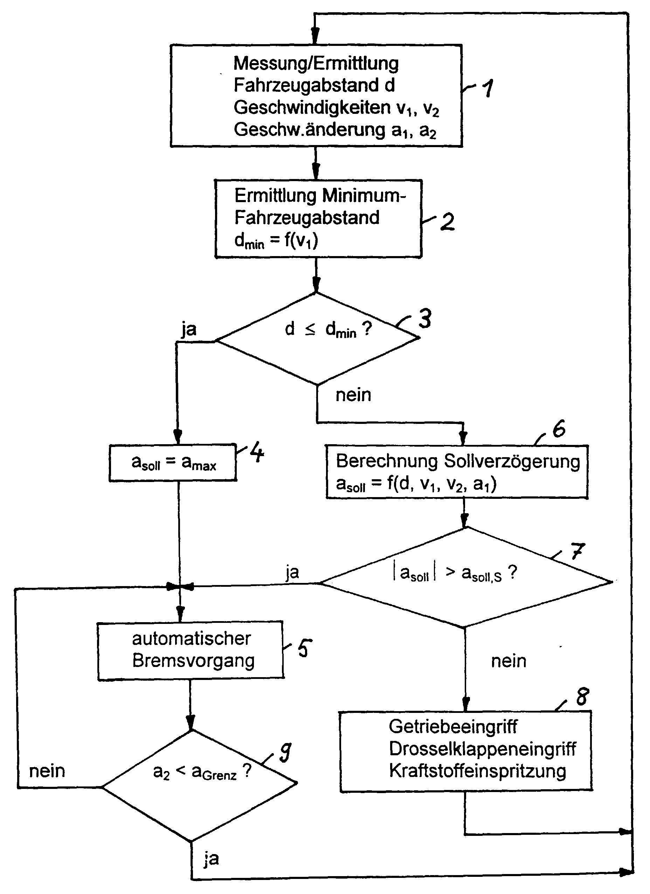

Weitere Vorteile und zweckmäßige Ausführungsformen sind den weiteren Ansprüchen, der Figurenbeschreibung und der Zeichnung zu entnehmen, die ein Ablaufdiagramm mit den Verfahrensschritten für ein erfindungsgemäßes Steuerungssystem zur Abstands- und Geschwindigkeitsregelung eines Fahrzeugs darstellt.

Das in der Figur dargestellte Ablaufschema ist in einem Steuerungssystem eines Kraftfahrzeugs zur Einhaltung eines Fahrzeugabstandes und/oder einer Relativgeschwindigkeit zu einem vorausfahrenden Fahrzeug realisiert. Das Steuerungssystem umfaßt eine Meßeinrichtung zur Messung des Abstandes zwischen dem Folgefahrzeug und dem vorausfahrenden Führungsfahrzeug sowie zur Messung der Geschwindigkeiten beider Fahrzeuge. Der einzuhaltende Abstand kann hierbei entweder vom Fahrer vorgegeben werden oder selbsttätig vom Steuerungssystem unter Beachtung sicherheitsrelevanter Größen wie der Absolutgeschwindigkeit eines Fahrzeugs oder beider Fahrzeuge vorgegeben werden. Dem Steuerungssystem ist eine Regel- und Steuereinheit zugeordnet, der die in der Meßeinrichtung erzeugten Meßsignale zugeführt werden und in der unter Berücksichtigung einer Regelvorschrift Stellsignale erzeugt werden, die diversen Fahrzeugkomponenten zur Einhaltung des Soll-Fahrzeugabstandes bzw. der Sollgeschwindigkeit des Folgefahrzeugs zugeführt werden. Über die Regel- und Steuereinheit kann das auf die Straße übertragbare Antriebsmoment manipuliert werden, insbesondere durch Beeinflussung des Motormoments der Brennkraftmaschine, durch Manipulation eines verwendeten Automatikgetriebes und durch Erzeugung von Bremssignalen, die einer Fahrzeugbremse zur Erzeugung von Bremsmoment zuführbar sind.

Gemäß dem Ablaufschema wird in einem Verfahrensschritt 1 der Fahrzeugabstand d sowie die Geschwindigkeiten $v_1$ und $v_2$ des Führungsfahrzeugs und des Folgefahrzeugs gemessen sowie aus aufeinanderfolgenden Messungen von Geschwindigkeitswerten beider Fahrzeuge die Geschwindigkeitsänderung $a_1$ des Führungsfahrzeuges und die Geschwindigkeitsänderung $a_2$ des Folgefahrzeuges ermittelt. Im folgenden Verfahrensschritt 2 wird ein Minimum-Fahrzeugabstand $d_{min}$, welcher einen unteren, zulässigen Grenzwert des Fahrzeugabstandes kennzeichnet, in Abhängigkeit der Geschwindigkeit $v_1$ des Führungsfahrzeugs berechnet. Der Minimum-Fahrzeugabstand ist zweckmäßig als lineare Funktion der Geschwindigkeit $v_1$ des Führungsfahrzeugs darstellbar und wird gemäß der Beziehung

$$d_{min} = k_1 * v_1 + k_2$$

berechnet, wobei $k_1$, $k_2$ Konstanten bezeichnen.

Im Verfahrensschritt 3 erfolgt eine Abfrage, ob der tatsächliche Fahrzeugabstand d kleiner ist als oder gleich groß ist wie der Minimum-Fahrzeugabstand $d_{min}$. Falls der Fahrzeugabstand den zulässigen unteren Grenzwert $d_{min}$ unterschreitet (Ja-Verzweigung), wird zum Verfahrensschritt 4 fortgefahren, in welchem eine Sollverzögerung $a_{soll}$ des Folgefahrzeugs auf einen konstanten Maximalwert $a_{max}$ gesetzt wird, wobei die Sollverzögerung als einzuhaltende Sollgröße in einem automatisch eingeleiteten und durchgeführten Bremsvorgang gemäß Verfahrensschritt 5 durch Beaufschlagung der Fahrzeugbremsen einzuhalten ist.

Falls die Abfrage im Verfahrensschritt 3 ergibt, daß der tatsächliche Fahrzeugabstand d größer ist als der erlaubte Minimum-Fahrzeugabstand $d_{min}$, wird gemäß der Nein-Verzweigung zum Verfahrensschritt 6 fortgefahren, in welchem die Sollverzögerung $a_{soll}$ als Funktion verschiedener Zustandsgrößen und Parameter sowohl des Führungsfahrzeuges als auch des Folgefahrzeuges berechnet wird.

Es kann zweckmäßig sein, im Falle eines den Minimum-Fahrzeugabstand $d_{min}$ übersteigenden tatsächlichen Abstandes d vor der Berechnung der Sollverzögerung $a_{soll}$ im Verfahrensschritt 6 zusätzlich zu überprüfen, ob die Geschwindigkeit $v_2$ des Folgefahrzeugs die Geschwindigkeit $v_1$ des Führungsfahrzeugs übersteigt. Sofern dies nicht der Fall ist, wird der Ablauf vorteilhaft abgebrochen und zum Verfahrensschritt 1 zurückgekehrt.

Im Verfahrensschritt 6 wird die aktuelle Sollverzögerung $a_{soll}$ in Abhängigkeit von Fahrzeug-Zustandsgrößen ermittelt, wobei die Sollverzögerung in zyklisch zu durchlaufenden Berechnungsschritten aktualisiert wird. Die Sollverzögerung $a_{soll}$ hängt insbesondere vom Fahrzeugabstand d, der Geschwindigkeit $v_1$ des Führungsfahrzeuges, der Geschwindigkeit $v_2$ des Folgefahrzeuges sowie der Geschwindigkeitsänderung $a_1$ des Führungsfahrzeuges ab. Die Sollverzögerung berechnet sich vorteilhaft gemäß der Beziehung

$$a_{soll} = (v_2 - v_1)^2 / (d_{Nenn} - d) + a_1 + C ,$$

wobei $d_{Nenn}$ einen Nennabstand bezeichnet, der vorgebbar ist oder als Funktion ermittelbar ist und C eine Konstante bezeichnet. Der Nennabstand $d_{Nenn}$ wird bevorzugt mit dem unteren Fahrzeugabstand-Grenzwert $d_{min}$ gleichgesetzt.

Nach der Berechnung der Sollverzögerung wird im folgenden Verfahrensschritt 7 überprüft, ob der Betrag der Sollverzögerung $a_{soll}$ einen Schwellenwert $a_{soll,S}$ überschreitet. Durch die Vorgabe eines Schwellenwertes können verschiedene Bereiche für die Sollverzögerung $a_{soll}$ unterschieden werden, denen jeweils unterschiedliche Eingriffe in Fahrzeugkomponenten des Kraftfahrzeugs zur Beeinflussung des auf die Straße übertragbaren Moments zugeordnet werden. Für den Fall, daß der Betrag der berechneten Sollverzögerung $a_{soll}$ nicht größer ist als der Schwellenwert $a_{soll,S}$ (Nein-Verzweigung), wird zum Verfahrensschritt 8 fortgefahren, gemäß dem kein Bremseneingriff, sondern ein Getriebeeingriff, ein Drosselklappeneingriff oder ein Eingriff in die Kraftstoffeinspritzung sowie gegebenenfalls in weitere, nicht dem Bremsensystem zuzuordnende Komponenten des Kraftfahrzeugs vorgenommen wird. Ein derartiger Eingriff außerhalb des Bremsensystems erfolgt vorteilhaft nur für den Fall, daß eine verhältnismäßig geringe Sollverzögerung im Folgefahrzeug umzusetzen ist, die gefahrlos mit weniger stark bremsenden Eingriffen durchgeführt werden kann.

Der Eingriff in eine außerhalb des Bremsensystems liegende Komponente wird zweckmäßig so lange fortgeführt, bis der einzuhaltende Mindestabstand $d_{min}$ oder gegebenenfalls die vorgegebene Geschwindigkeit des Folgefahrzeugs erreicht worden ist. Daraufhin wird das Ablaufschema in einem neuen Zyklus durchlaufen.

Falls im Verfahrensschritt 7 festgestellt wird, daß der Betrag der Sollverzögerung $a_{soll}$ größer ist als der vorgegebene Schwellenwert $a_{soll,S}$ (Ja-Verzweigung), wird zum Verfahrensschritt 5 fortgefahren und ein automatischer Bremsvorgang eingeleitet, bei welchem die Fahrzeugbremse vom Steuerungssystem aktiviert wird. Die Aktivierung der Fahrzeugbremse erfolgt in der Weise, daß ein geregelter Bremsdruck aufgebaut wird, der die Sollverzögerung in eine tatsächliche Fahrzeugverzögerung umsetzt.

Der automatische Bremsvorgang kann unabhängig von einer vom Fahrer ausgelösten Bremsbetätigung einsetzen, so daß insbesondere auch der Fall eintreten kann, daß im automatischen Bremsvorgang der vom Fahrer erzeugte Bremsdruck verstärkt wird, damit die Sollverzögerung $a_{soll}$ eingehalten werden kann, wobei die Sollverzögerung $a_{soll}$ sowohl als zustandsgrößenabhängiger und zyklisch aktualisierbarer Wert gemäß Verfahrensschritt 6 als auch als Maximalwert gemäß Verfahrensschritt 4 bereitgestellt werden kann.

Wie in Verfahrensschritt 9 dargestellt, wird als Abbruchbedingung für den automatischen Bremsvorgang überprüft, ob die Ist-Verzögerung $a_2$ des Folgefahrzeugs einen vorgegebenen Verzögerungs-Grenzwert $a_{Grenz}$ unterschreitet, wobei als Zusatzbedingung berücksichtigt werden kann, daß die Unterschreitung über einen Mindestzeitraum aufrechterhalten werden muß. Sofern die Bedingungen erfüllt sind, wird der Ja-Verzweigung entsprechend zum Verfahrensschritt 1 für einen erneuten Durchlauf des Ablaufschemas zurückgekehrt. Andernfalls wird der Nein-Verzweigung entsprechend zum Verfahrensschritt 5 zurückgekehrt und der automatische Bremsvorgang fortgesetzt.

**Patentansprüche**

1. Verfahren zur Regelung des Abstandes und/oder der Geschwindigkeit eines einem Führungsfahrzeug nacheilenden Folgefahrzeugs, wobei der Abstand (d) zwischen Folgefahrzeug und vorausfahrendem Führungsfahrzeug und die Geschwindigkeiten ($v_1$, $v_2$) des Folgefahrzeugs und des Führungsfahrzeugs gemessen werden und bei Unterschreitung eines Mindestabstands ($d_{min}$) und/oder bei Überschreitung einer Mindest-Geschwindigkeitsdifferenz eine Sollverzögerung ($a_{soll}$) für das Folgefahrzeug ermittelt und eine automatische Betätigung der Fahrzeugbremse des Folgefahrzeugs eingeleitet wird,
**dadurch gekennzeichnet,**

   daß die automatische Betätigung der Fahrzeugbremse nur für den Fall ausgelöst wird, daß der Betrag der Sollverzögerung ($a_{soll}$) einen Schwellenwert ($a_{soll,S}$) überschreitet.

2. Verfahren nach Anspruch 1,
**dadurch gekennzeichnet,**

   daß für den Fall, daß der Betrag der Sollverzögerung ($a_{soll}$) den Schwellenwert ($a_{soll,S}$) unterschreitet, die Fahrzeugverzögerung über Getriebeeingriffe und/oder Motormomenteneingriffe realisiert wird.

3. Verfahren nach Anspruch 1 oder 2,

**dadurch gekennzeichnet,**

daß der automatische Bremsvorgang zumindest solange aufrecht erhalten wird, bis ein Grenzwert ($a_{Grenz}$) der Sollverzögerung erreicht wird.

4. Verfahren nach Anspruch 3,
**dadurch gekennzeichnet,**

daß zur Beendigung des automatischen Bremsvorganges der Grenzwert ($a_{Grenz}$) der Sollverzögerung für eine vorgegebene Zeitspanne aufrecht erhalten werden muß.

5. Verfahren nach einem der Ansprüche 1 bis 4,
**dadurch gekennzeichnet,**

daß die Sollverzögerung ($a_{soll}$) als Funktion des Quadrats der Geschwindigkeitsdifferenz ($v_2 - v_1$) darstellbar ist.

6. Verfahren nach einem der Ansprüche 1 bis 5,
**dadurch gekennzeichnet,**

daß die Sollverzögerung ($a_{soll}$) reziprok vom Fahrzeugabstand (d) abhängt.

7. Verfahren nach einem der Ansprüche 1 bis 6,
**dadurch gekennzeichnet,**

daß die Sollverzögerung ($a_{soll}$) reziprok von der Geschwindigkeit ($v_1$) des Führungsfahrzeugs abhängt.

8. Verfahren nach einem der Ansprüche 1 bis 7,
**dadurch gekennzeichnet,**

daß die Sollverzögerung ($a_{soll}$) als Funktion der Geschwindigkeitsänderung ($a_1$) des Führungsfahrzeugs darstellbar ist.

9. Verfahren nach einem der Ansprüche 1 bis 8,
**dadurch gekennzeichnet,**

daß die Sollverzögerung ($a_{soll}$) gemäß der Vorschrift

$$a_{soll} = (v_2 - v_1)^2 / (d_{Nenn} - d) + a_1 + C$$

darstellbar ist, wobei

$a_{soll}$ die Sollverzögerung,
$v_1$ die Geschwindigkeit des Führungsfahrzeugs,
$v_2$ die Geschwindigkeit des Folgefahrzeugs,
$a_1$ die Geschwindigkeitsänderung des Führungsfahrzeugs,
d den Fahrzeugabstand,
$d_{Nenn}$ einen gegebenen oder ermittelbaren Nennabstand,
C eine Konstante

bezeichnen.

10. Verfahren nach Anspruch 9,
**dadurch gekennzeichnet,**

daß der Nennabstand ($d_{Nenn}$) in Abhängigkeit der Geschwindigkeit ($v_1$) des Führungsfahrzeugs gemäß der Beziehung

$$d_{Nenn} = k_1 {}^* v_1 + k_2$$

ermittelt wird, wobei

$k_1$, $k_2$ Konstanten

bezeichnen.

11. Verfahren nach Anspruch 9 oder 10,
**dadurch gekennzeichnet,**

daß die Sollverzögerung ($a_{soll}$) nur für den Fall ermittelt wird,
daß die Geschwindigkeit ($v_2$) des Folgefahrzeugs die Geschwindigkeit ($v_1$) des Führungsfahrzeugs übersteigt.

12. Verfahren nach einem der Ansprüche 9 bis 11,
**dadurch gekennzeichnet,**

daß die Sollverzögerung ($a_{soll}$) für den Fall, daß der Fahrzeugabstand (d) einen unteren Grenzwert ($d_{min}$) unterschreitet, auf einen konstanten Maximalwert ($a_{max}$) gesetzt wird.

13. Verfahren nach Anspruch 12,
**dadurch gekennzeichnet,**

daß der untere Fahrzeugabstand-Grenzwert ($d_{min}$) auf den Nennabstand ($d_{Nenn}$) festgesetzt wird.

14. Verfahren nach einem der Ansprüche 1 bis 13,
**dadurch gekennzeichnet,**

daß der automatische Bremsvorgang unabhängig von einer vom Fahrer ausgelösten Bremsbetätigung erfolgt.

15. Verfahren nach einem der Ansprüche 1 bis 14,
**dadurch gekennzeichnet,**

daß aus der Sollverzögerung ($a_{soll}$) ein Soll-

Bremsdruck ermittelt wird, der der Bremsdruck-Regelung zugrunde gelegt wird.

16. Steuerungssystem für ein Fahrzeug, insbesondere zur Durchführung des Verfahrens nach einem der Ansprüche 1 bis 15, mit einer Meßeinrichtung zur Messung des Abstandes (d) zwischen einem Folgefahrzeug und einem vorausfahrenden Führungsfahrzeug sowie zur Messung der Geschwindigkeiten ($v_1$, $v_2$) des Führungsfahrzeugs und des Folgefahrzeugs, mit einer Regel- und Steuereinheit zur Erzeugung von Stellsignalen in Abhängigkeit von den Meßsignalen der Meßeinrichtung, wobei bei Unterschreitung eines Mindestabstands (d) und/oder bei Überschreitung einer Mindest-Geschwindigkeitsdifferenz eine Sollverzögerung ($a_{soll}$) für das Folgefahrzeug ermittelt wird und ein eine Bremseinrichtung einstellendes Stellsignal zur automatischen Abbremsung des Folgefahrzeugs generierbar ist,
**dadurch gekennzeichnet,**

daß in einer Vergleichseinheit der Regel- und Steuereinheit die Sollverzögerung ($a_{soll}$) mit einem Schwellenwert ($a_{soll,S}$) vergleichbar ist und daß die automatische Bremseinrichtung nur für den Fall aktivierbar ist, daß der Betrag der Sollverzögerung ($a_{soll}$) den Schwellenwert ($a_{soll,S}$) überschreitet.

17. Steuerungssystem nach Anspruch 16,
**dadurch gekennzeichnet,**

daß die Regel- und Steuereinheit eine Geschwindigkeits-Regeleinheit und eine automatische Bremseinheit umfaßt, wobei in Abhängigkeit des Betrags der Sollverzögerung ($a_{soll}$) ein Umschaltsignal zur Umschaltung zwischen der Geschwindigkeits-Regeleinheit und der automatischen Bremseinheit erzeugbar ist.